# EUROPÄISCHE PATENTSCHRIFT

(11) **EP 0 364 911 B1**
(45) Veröffentlichungstag und Bekanntmachung des Hinweises auf die Patenterteilung: **17.03.1993**
(21) Anmeldenummer: 89119129.8
(22) Anmeldetag: 14.10.1989
(51) Int. Cl.: F22B 37/00

(54) **Werkzeug- und Inspektionsgeräteträger für eine Einrichtung zur Prüfung oder Reparatur eines Dampferzeugers**
Tool and inspection probe support for an examination and repair device of a steam generator
Support d'outil et de sonde d'inspection pour dispositif d'examen et de réparation de générateur de vapeur

(30) Priorität: 21.10.1988 DE 8813215 U
(43) Veröffentlichungstag der Anmeldung: 25.04.1990
(73) Patentinhaber: ABB Reaktor GmbH, D-68167 Mannheim (DE)
(72) Erfinder: Osusko, Boris, D-7525 Bad Schönborn (DE)
(74) Vertreter: Rupprecht, Klaus, Dipl.-Ing.

(56) Entgegenhaltungen:
- EP-A- 0 027 388
- WO-A-87/06333
- FR-A- 2 526 532
- US-A- 4 663 727

## Beschreibung

Die Erfindung betrifft eine Einrichtung zur Prüfung und/oder Reparatur der Rohre eines Dampferzeugers, wobei die Einrichtung in einer über ein Mannloch zugänglichen Kammer unterhalb eines Rohrbodens des Dampferzeugers angeordnet ist und einen Werkzeug- oder Inspektionsgeräteträger aufweist.

Ein derartiger Träger ist aus der DE-PS 22 63 143 bekannt. Dort werden die Werkzeuge oder die Inspektionsgeräte durch einen Transportschlauch von außerhalb des Dampferzeugers an den Rohrboden herangeführt. Die erforderliche Bewegung innerhalb des Transportschlauches kann zu Störungen beim Ein- bzw. Ausbringen der Werkzeuge und Inspektionsgeräte führen. Die Transporteinrichtung für die biegsame Welle ist außerhalb der Dampferzeugerkammer angeordnet, so daß lange Transportwege zurückzulegen sind.

Es stellt sich die Aufgabe einen Werkzeug- oder Inspektionsgeräteträger der eingangs genannten Art anzugeben, der bei einem kompakten Aufbau des Trägers einen störungsfreien Wechsel von Werkzeugen oder Inspektionsgeräten sicherstellt.

Gelöst wird diese Aufgabe erfindungsgemäß dadurch, daß der Träger einen mit der Einrichtung lösbar verbundenen, pneumatisch gesteuerten Schwenkzylinder aufweist, daß eine Abtriebswelle des Schwenkzylinders eine Vorschubeinheit zur axialen Bewegung einer biegsamen Welle trägt und daß ein Druckluftmotor zum Antrieb der biegsamen Welle an dem Gesäuse des Schwenkzylinders befestigt ist, wobei die gesamte Vorschubeinheit mit der Abtriebswelle des Schwenkzylinders von einer in Achsrichtung der Rohre erstreckten Arbeitsposition aus soweit geschwenkt werden kann, daß ein axiales Verfahren der biegsamen Welle aus dem Manhloch heraus nach außerhalb der Dampferzeugerkammer erfolgen kann.

In dieser Position erfolgt ein Wechsel des Inspektionsgerätes oder Werkzeuges. Die Vorschubeinheit kann nun problemlos wieder in ihre Arbeitsposition geschwenkt werden. Trotz seiner Schwenkbarkeit gelingt eine kompakte Bauweise des Trägers, die seine Zugänglichkeit zu allen Positionen des Rohrbodens sicherstellt und ohne Transportschlauch auskommt.

In Fortführung der platzsparenden Ausbildung des Trägers wird vorgesehen, daß das Gehäuse des Schwenkzylinders an seiner dem Druckluftmotor abgewandten Seite einen Abluftfilter trägt.

Die kompakte Ausbildung wird ferner dadurch unterstrichen, daß ein weiterer Druckluftmotor zur Bewegung der Vorschubeinheit sowie ein ihm zugeordnetes Winkelgetriebe zwischen dem Gehäuse des Schwenkzylinders und der Vorschubeinheit angeordnet ist.

Anhand eines Ausführungsbeispieles und der schematischen Zeichnungen Figur 1 bis 4 wird ein Werkzeug- oder Inspektionsgeräteträger nach der Erfindung beschrieben.

Dabei zeigt die
Figur 1 einen Teilbereich eines Dampferzeugers mit der in der Dampferzeugerkammer angeordneten Einrichtung und dem Werkzeug- oder Inspektionsgeräteträger,
Figur 2 eine Seitenansicht des Trägers in einem größeren Maßstab,
Figur 3 eine Ansicht in Pfeilrichtung III der Figur 2 und
Figur 4 eine Ansicht entlang der Linie IV-IV nach der Figur 3.

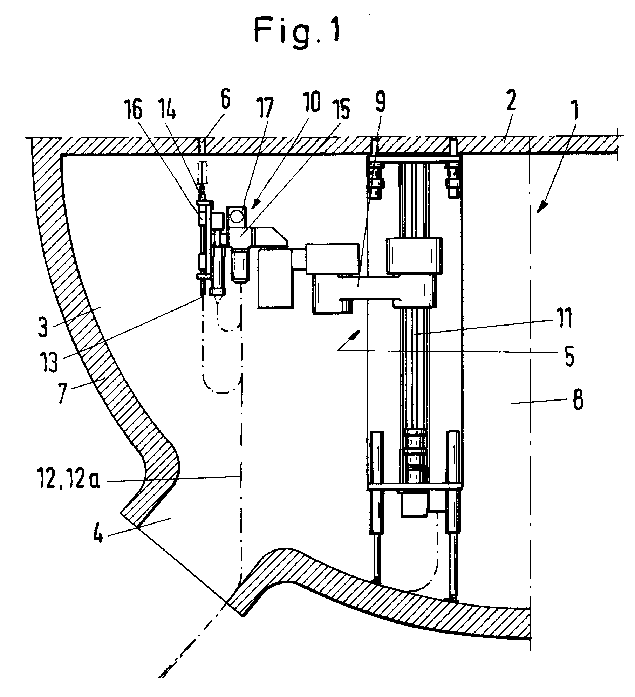

Die Figur 1 zeigt den Teilbereich eines Dampferzeugers 1 mit einem Rohrboden 2 und einer halbkugelförmig begrenzten Kammer 3. Ein Mannloch 4 durchdringt die halbkugelförmig ausgebildete Wand 7 der Kammer 3 und erlaubt das Einbringen einer Einrichtung 5 zum Prüfen und/oder Reparieren der im Rohrboden 2 endenden Rohre 6. Die Einrichtung besteht aus einem zwischen dem Rohrboden 2 und der Wand 7 erstreckten Standbein 8. Dem Standbein ist ein parallel zum Rohrboden verfahrbarer Gelenkarm 9 zugeordnet, der an seinem dem Standbein abgewandten Ende einen Träger 10 für Werkzeuge und/oder Inspektionsgeräte aufnimmt. Mit Hilfe eines dem Standbein zugeordneten Spindeltriebes 11 ist der Gelenkarm 9 in vertikaler Richtung bewegbar. Zu dem Träger 10 führen Versorgungsleitungen 12, 12a für Druckluft und Strom, um eine biegsame Welle sowohl in Drehung zu versetzen als auch in ihrer axialen Richtung zu bewegen. Die biegsame Welle trägt an ihrem dem Rohrboden 2 zugewandten Ende eine Schnellkupplung 14 zur wahlweisen Aufnatime verschiedenartiger Werkzeuge oder Inspektionsgeräte. Der Träger besteht im wesentlichen aus einem mit dem Gelenkarm 9 lösbar verbundenen Schwenkzylinder 15, einer Vorschubeinheit 16 und einem Druckluftmotor 17 zum Antrieb der biegsamen Welle 13.

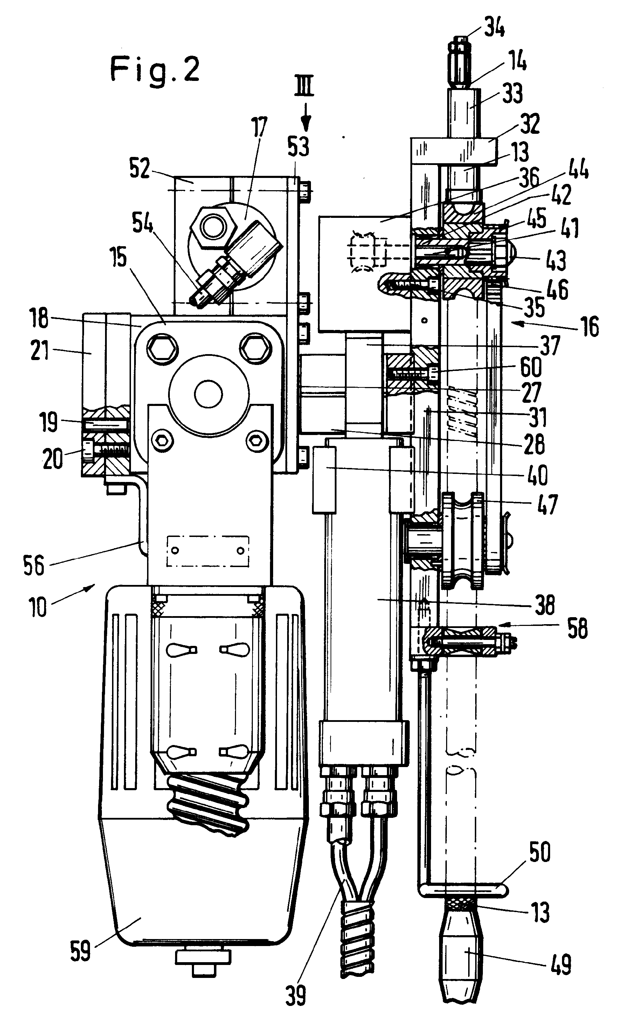

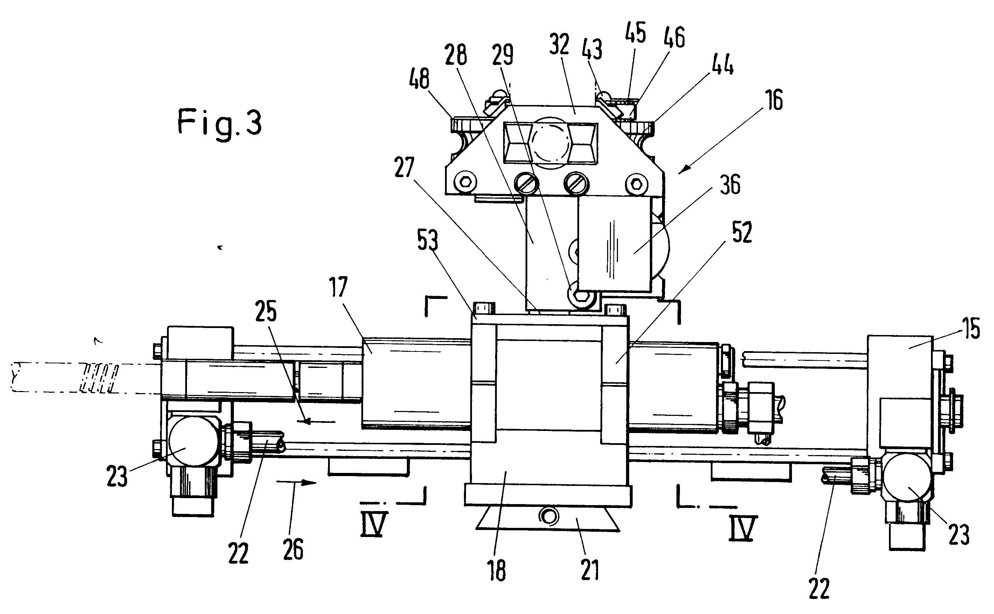

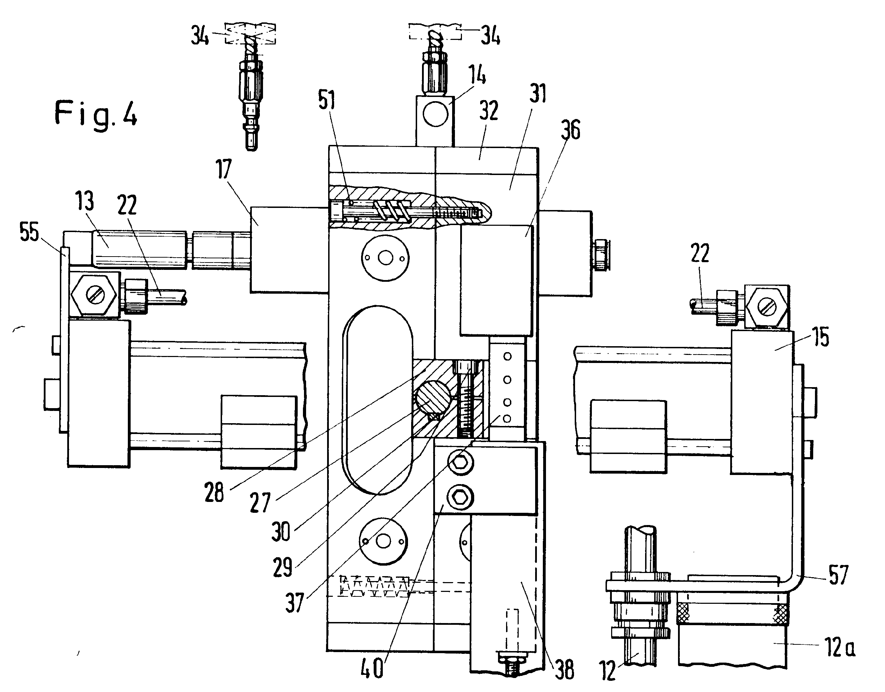

Das Zusammenspiel der Bauteile des Trägers 10 zu einer kompakten und platzsparenden Vorrichtung wird anhand der Figuren 2 bis 4 erläutert. Der gegenüber der Darstellung in Figur 1 in der Figur 2 um 180° verdreht gezeichnete Träger 10 ist über ein dem Gehäuse 18 des Schwenkzylinders 15 über Stifte 19 und Schrauben 20 zugeordneten Kupplungsstück 21 mit dem Gelenkarm 9 (Figur 1) lösbar verbunden. Der Schwenkzylinder 15, dessen Druckluftanschluß 22 nach Figur 3 und 4 unter Zwischenschaltung eines Drosselrückschlagventils 23 erfolgt, stellt das tragende Bauteil des Trägers dar. Je nach dem, welche Seite des Schwenkzylinders 15 angesteuert wird, erfolgt eine Linearbewegung einer nicht dargestellten das Gehäuse 18 durchsetzenden Zahnstang in Pfeilrichtung 25 oder 26 und führt zu einer entsprechenden Drehbewegung eines im Gehäuse 18 angeordneten, nicht dargestellten, Ritzels. Das Ritzel ist Bestandteil einer das Gehäuse 18 verlassenden Abtriebswelle 27. Ein geschlitzter Lagerbock 28 geht über die Schrauben 29 eine Klemmverbindung ein, deren Mitnahmefunktion noch durch eine Nut-/Federanordnung 30 unterstützt wird. Am Lagerbock 28 ist über Schrauben 60 eine Montageplatte 31 der Vorschubeinheit 16 befestigt. An die Montageplatte 31 ist eine Konsole 32 angeschraubt, die von der biegsamen Welle 13 durchsetzt ist. Das Endstück 33 der biegsamen Welle 13 beinhaltet eine Schnellkupplung 14 zur Aufnahme eines Werkzeuges 34. An der Montageplatte 31 ist über die Schrauben 35 ein Schneckengetriebe 36 befestigt, das über ein Kupplungsstück 37 mit einem Druckluftmotor 38 kraftschlüssig verbunden ist. Der Druckluftmotor 38, dessen Druckluftanschluß bei 39 angedeutet ist, ist mit einem Motorhalter 40 ebenfalls an der Montageplatte 31 befestigt. Aufgrund einer entsprechenden Aussparung am Lagerbock 28 ist der Druckluftmotor 38 und sein Schneckengetriebe 36 platzsparend angeordnet. Eine Schneckenwelle 41 des Schneckengetriebes 36 durchsetzt die Montageplatte 31 und ist mit einer drehbar in der Montageplatte 31 gelagerten Welle 42 verstiftet. Mit einer Hutmutter 43 sind die der Welle 42 zugeordneten Bauteile Antriebsrolle 44 und Zahnriemenrad 45 gesichert. Über einen Zahnriemen 46 erfolgt der Antrieb einer weiteren, ebenfalls drehbar an der Montage platte 31 gelagerten Rolle 47. Den Rollen 44, 47 sind Führungsrollen 48 nebengeordnet, die ebenfalls drehbar in der Montageplatte 31 gelagert sind. Die Rollen 44, 47 und 48 bilden zusammen den Antrieb der biegsamen Welle 13 in ihrer Achsrichtung. Eine an der Montageplatte 31 befestigte Laufrolle 58 bildet in Zusammenspiel mit einer auf der biegsamen Welle sitzenden konischen Hülse 49 einen Endschalter zur Begrenzung der Vorschubbewegung der biegsamen Welle. Ein am unteren Ende der Montageplatte 31 angebrachter Hebebügel 50 dient der Führung der biegsamen Welle. Die zweigeteilte Ausführung der Montageplatte 31 gestattet mit Hilfe der Federn 51 die Regelung der Andrückkraft der Rollen 44, 47, 48 auf die biegsame Welle 13. Unter Belassung eines ausreichenden axialen Bewegungsspielraumes ist die biegsame Welle 13 mit dem über einen Halter 53 und einen Klemmbügel 52 am Gehäuse 18 des Schwenkzylinders 15 befestigten Druckluftmotor 17 verbunden. Dieser Druckluftmotor, dessen Druckluftanschluß bei 54 angedeutet ist, sorgt für den Drehantrieb der biegsamen Welle 13. Ein mit dem Schwenkzylinder 15 verschraubter Wellenhalter 55 dient der Abstützung der biegsamen Welle 13 im Bereich des Druckluftmotors 17. Das Gehäuse 18 des Schwenkzylinders 15 trägt einen dort angeschraubten Haltebügel 56 ferner einen Abluftfilter 59 für die Druckluftmotoren 17 und 38. An einer Seitenfläche des Schwenkzylinders 15 sind mit einem Kupplungshalter 57 die Versorgungsanschlüsse 12, 12a für Strom und Druckluft befestigt.

Soll ein Werkzeug oder ein Inspektionsgerät gegen ein anderes ausgetauscht werden, erfolgt eine Drehbewegung der Abtriebswelle 27 des Schwenkzylinders 15. Die auf der Abtriebswelle befestigte Vorschubeinheit 16 führt die Drehbewegung mit aus, bis über einen Endschalter gesteuert, die Vorschubeinheit ihre Wechselposition auf der Höhe des Mannloches 4 erreicht hat. Der Druckluftmotor 38 setzt über das Schneckengetriebe 36 den Rollenantrieb der biegsamen Welle in Gang und führt sie durch das Mannloch nach außerhalb der Dampferzeugerkammer, so daß dort problemlos der Wechsel eines Werkzeuges oder eines Inspektionsgerätes erfolgen kann. Nach erfolgtem Wechsel wird die biegsame Welle wieder in die Kammer zurückgefahren, so daß sie über die Verdrehung der Abtriebswelle wieder in ihre Arbeitsposition unterhalb des Rohrbodens gelangt.

## Patentansprüche

1. Einrichtung zur Prüfung und/oder Reparatur der Rohre eines Dampferzeugers (6) wobei die Einrichtung in einer über ein Mannloch (4) zugänglichen Kammer (3) unterhalb eines Rohrbodens (2) des Dampferzeugers (6) angeordnet ist und einen Werkzeug- oder Inspektionsgeräteträger (10) aufweist, **dadurch gekennzeichnet,** daß der Träger (10) einen mit der Einrichtung (5) lösbar verbundenen pneumatisch gesteuerten Schwenkzylinder (15) aufweist, daß eine Abtriebswelle (27) des Schwenkzylinders eine Vorschubeinheit (16) zur axialen Bewegung einer biegsamen Welle (13) trägt und daß ein Druckluftmotor (17) zum Antrieb der biegsamen Welle (13) an dem Gehäuse (18) des Schwenkzylinders (15) befestigt ist, wobei die gesamte Vorschubeinheit (16) mit der Abtriebswelle (27) des Schwenkzylinders (15) von einer in Achsrichtung der Rohre erstreckten Arbeitsposition aus soweit geschwenkt werden kann, daß ein axiales Verfahren der biegsamen Welle (13) aus dem Mannloch (4) heraus nach außerhalb der Dampferzeugerkammer (3) erfolgen kann.

2. Einrichtung nach Anspruch 1, dadurch gekennzeichnet, daß das Gehäuse (18) des Schwenkzylinders (15) an seiner dem Druckluftmotor (17) abgewandten Seite einen Abluftfilter (59) trägt.

3. Einrichtung nach Anspruch 1 oder 2, dadurch gekennzeichnet, daß ein weiterer Druckluftmotor (38) sowie ein ihm zugeordnetes Schneckengetriebe (36) zum Antrieb einer Rolle (44) der Vorschubeinheit (16) zwischen dem Gehäuse (18) des Schwenkzylinders (15) und der Vorschubeinheit (16) angeordnet ist.

## Claims

1. Apparatus for examining and/or repairing the tubes of a steam generator (6), the apparatus being arranged in a chamber (3), accessible via a manhole (4), below a tube plate (2) of the steam generator (6) and having a tool or inspection-instrument carrier (10), characterised in that the carrier (10) has a pneumatically controlled swivel cylinder (15) detachably connected to the apparatus (5), in that an output shaft (27) of the swivel cylinder carries a feed unit (16) for axially moving a flexible shaft (13), and in that a compressed-air motor (17) for driving the flexible shaft (13) is fastened to the housing (18) of the swivel cylinder (15), in which arrangement the entire feed unit (16) can be swivelled by the output shaft (27) of the swivel cylinder (15) from a working position extending in the axial direction of the tubes to such an extent that the flexible shaft (13) can be moved axially out of the manhole (4) outside the steam-generator chamber (3).

2. Apparatus according to Claim 1, characterised in that the housing (18) of the swivel cylinder (15) carries an exhaust-air filter (59) on its side remote from the compressed-air motor (17).

3. Apparatus according to Claim 1 or 2, characterised in that a further compressed-air motor (38) as well as a worm gear (36) allocated to it for driving a roller (44) of the feed unit (16) is arranged between the housing (18) of the swivel cylinder (15) and the feed unit (16).

## Revendications

1. Dispositif d'inspection et/ou de réparation des tubes d'un générateur de vapeur (6), le dispositif étant placé dans une chambre (3) située au-dessous d'une plaque tubulaire (2) d'un générateur de vapeur (6), accessible par un trou d'homme (4), et comportant un support d'outil ou d'appareil d'inspection (10), caractérisé par le fait que le support (10) présente un vérin de pivotement (15) pneumatique qui est lié avec possibilité de désaccouplement au dispositif (5), qu'un arbre de sortie (27) du vérin (15) porte un mécanisme d'avancement (16) assurant le déplacement axial d'un arbre (13) flexible et qu'un moteur pneumatique (17) destiné à entraîner l'arbre (13) flexible est fixé sur le corps (18) du vérin de pivotement (15), l'ensemble du mécanisme d'avancement (16) avec l'arbre de sortie (27) du vérin (15) pouvant être déplacé par pivotement à partir d'une position de travail dans l'axe des tubes de manière à permettre la sortie axiale de l'arbre (13) flexible vers l'extérieur de la chambre (3) du générateur de vapeur à travers le trou d'homme (4).

2. Dispositif selon la revendication 1, caractérisé par le fait que le corps (18) du vérin de pivotement (15) porte un filtre de sortie d'air (59) sur le côté éloigné du moteur pneumatique (17).

3. Dispositif selon la revendication 1 ou 2, caractérisé par le fait qu'un moteur pneumatique (38) supplémentaire ainsi qu'un mécanisme à vis sans fin (36) associé destiné à l'entraînement d'un galet (44) du mécanisme d'avancement (16) est monté entre le corps (18) du vérin de pivotement (15) et le mécanisme d'avancement (16).
